# EUROPEAN PATENT APPLICATION

(11) **EP 3 800 323 A1**
(43) Date of publication of application: **07.04.2021**
(21) Application number: 19200860.5
(22) Date of filing: 01.10.2019
(51) Int. Cl.: E21B 41/00, E21B 47/10, E21B 49/00

(54) **VIRTUAL FLOW METER METHOD AND SYSTEM FOR MONITORING FLOW OF AN OIL WELL IN AN INDUSTRIAL ENVIRONMENT**

(71) Applicant: Siemens Aktiengesellschaft, 80333 München (DE)
(72) Inventor: MITTAL, Akash, 560047 Bengaluru, Karnataka (IN)
(74) Representative: Isarpatent

(57) **Abstract**

The present invention relates to a virtual flow meter method and system for monitoring flow of an oil well in an industrial environment. The method comprises generating a simulation model associated with an oil well 108 based on an oil well data. The oil well data is received from at least one measuring unit 110AN deployed in a technical installation 106 via a communication network 104. The method further comprises determining data sets associated with the oil well 108 based on the generated simulation model. Further, the method comprises generating data analytics model for the oil well 108 based on the determined data sets. Furthermore, the method comprises estimating actual subset values of data sets based on the generated data analytics model associated with the oil well 108.

## Description

The present invention generally relates to the field of oil and gas industry, and more particularly relates to a virtual flow meter method and system for monitoring flow of an oil well in an industrial environment.

In oil and gas industry, multiphase flowrate measurements of an oil play an important role in production optimization and reservoir management. The flow of the oil is measured with parameters such as flow rate, gas to oil ratio, water cut and the like. Flowmeters are used to measure these parameters indicating the flow of the oil through various parts of a production system. Conventionally, hardware multiphase flow meters are used for measuring these parameters, which are expensive and are error and erosion prone. Specifically, the hardware multiphase flow meters comprise one or more sensing devices to estimate flow rate of each phase of the oil. Hence, such hardware flow meters are not reliable as the sensors may be susceptible to failure. Also, such flow meters often encounter communication and power supply issues.

An alternative to such hardware flow meters is a virtual flow meter which estimates the flow rates of the fluid without measuring the parameters directly. This is achieved by a combination of hardware sensors and suitable modelling methods. Such hardware sensors may include pressure and temperature sensors which are less complex from whom measurements flow data are extrapolated. The modelling techniques for virtual flow metering may include physics-based model (or simulation models) and data driven models.

The physics-based models estimate the flow rates of the fluid by hydrodynamical models using sensor data (e.g., pressure and temperature) as input parameters. However, engineers depend heavily on such physics-based models after analyzing and evaluating a wide range of data that influence well productivity to predict and optimize production rates. Conventionally, many of the physics-based modeling users do not follow a standard approach in inputting the correct data into a simulator nor in the performance calibration step. Hence, this process is lengthy and subject to human input errors.

The data driven models may be based on production conditions, historical results, and well characteristics for the well that is being evaluated. However, such data driven models are limited in their capabilities, and may suffer from significant inaccuracies in the resulting estimates. Also, such data driven models used by such virtual flow meters lacks efficient extrapolation capabilities as the data driven models are only trained for data captured. Hence, the underlying physics-based calibration required for the data captured is missing in such data driven models. Furthermore, the virtual flow meters require extensive and repeated tuning in case of any modifications made to the parameters of the oil well.

Therefore, there is always a constant need for enhancing virtual flow metering method for monitoring flow of an oil well in an industrial environment, which is more accurate, scalable and dynamic.

Therefore, it is an object of the present invention to provide a virtual flow meter method and system for monitoring flow of an oil well in an industrial environment.

The object of the present invention is achieved by a virtual flow meter method and system for monitoring flow of an oil well in an industrial environment. The method comprises generating a simulation model associated with an oil well based on an oil well data. The oil well data is received from at least one measuring unit deployed in an industrial environment via a communication network. The method further comprises determining data sets associated with the oil well based on the generated simulation model. Further, the method comprises generating data analytics model for the oil well based on the determined data sets. Furthermore, the method comprises estimating actual subset values of data set based on the generated data analytics model associated with the oil well.

In a preferred embodiment, generating data analytics model for the oil well based on the determined data sets, the method comprises generating first data analytics model data analytics model for the oil well based on the determined data sets.

In another preferred embodiment, generating data analytics model for the oil well based on the determined data sets, the method comprises determining a first subset values of data sets based on the generated first data analytics model. Further, the method comprises determining a difference between the first subset values of data sets and a test subset values of data sets. The test subset values of data sets are computed based on the received oil well data and wherein the difference is an first data anlaytics model error value. Also, the method comprises generating a second data analytics model for the oil well based on the determined difference and the oil well data. The first analytics data model and the second analytics data model are generated using artificial intelligence or machine learning methods.

In another preferred embodiment, in estimating actual subset values of data set based on the generated data analytics model associated with the oil well, the method comprises determining a second subset values of data sets based on the generated second data analytics model. Further, the method comprises summing the first subset values of data sets derived from the first data analytics model with the second subset values of data sets derived from the second analytics model. The method further comprises estimating actual subset values of data sets based on the sum of the first subset values of data sets and the second subset values of data sets. The subset values of data sets comprise flowrate, gas to oil ratio and water cut of the oil well deployed in the technical installation.

The method comprises continuously training the data analytics model based on the received oil well data and the corresponding simulation model associated with the oil well.

Further, the method comprises determining one or more modifications in the oil well data received from the one or more measuring unit deployed in the industrial environment. Also, the method comprises updating the data analytics model with the determined one or more modifications.

The object of the present invention is also be achieved by a system for monitoring flow of an oil well in an industrial environment. The system may comprise one or more processors and a memory coupled to the one or more processors. The memory comprises a virtual flow metering module stored in the form of machine-readable instructions and executable by the one or more processors.

The virtual flow metering module is configured for performing the method described above.

The object of the invention can also be achieved by an industrial environment. The industrial environment comprises one or more measuring devices for measuring one or more oil well data associated with an oil well and a system communicatively coupled to the one or more measuring devices via a network.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of an industrial environment capable of monitoring flow of an oil well, according to an embodiment of the present invention;
- FIG 2: is a block diagram of a computing system such as those shown in FIG 1, depicting various components to implement embodiments of the present invention;
- FIG 3: is a block diagram of a virtual flow metering module, such as those shown in FIG 1 and 2, capable of monitoring flow of an oil well, according to the embodiment of the present invention;
- FIG 4: is a process flowchart illustrating an exemplary method of monitoring flow of an oil well in an industrial environment, according to the embodiment of the present invention;
- FIG 5: is a process flowchart illustrating an exemplary method of monitoring flow of an oil well in an industrial environment, according to another embodiment of the present invention;
- FIG 6: is a schematic representation of a process of generating data analytics model for the oil well, according to another embodiment of the present invention;
- FIG 7: is a schematic representation of a process of estimating actual subset values of data sets based on the generated data analytics model associated with the oil well, according to an embodiment of the present invention; and
- FIG 8A-B: is a graphical representation of estimated subset values versus actual subset values of data sets, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

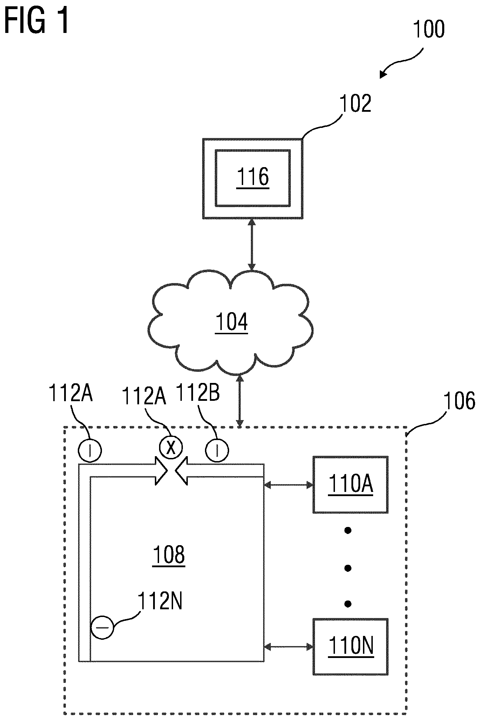

FIG 1 is a schematic representation of an industrial environment 100 capable of monitoring flow of an oil well, according to an embodiment of the present invention. Particularly, FIG 1 depicts a computing system 102 which is capable of managing a technical installation 106. The technical installation 106 comprises an oil well 108, and one or more measuring units 110A-N. The oil well 108 may further comprise one or more pressure or temperature sensors 112A-N and a choke valve 114. The one or more pressure or temperature sensors 112A-N or the choke valve 114 or the one or more measuring units 110A-N may be internet of things (IoT) enabled.

The one or more measuring unit 110A-N may be sensors or flowmeters embedded at multiple positions on the oil well 108. The one or more measuring unit 110A-N is configured for capturing oil well data. The real time oil well data comprises reservoir pressure, reservoir PI, Choke valve opening, flowrate, Gas-to-oil ratio, Water-cut, inflow performance relationship, vertical performance relationship and surface facilities like Choke valve.

Specifically, the one or more measuring unit 110A-N senses the data of the oil well 108 and transmits the sensed oil well data to the computing system 102 via a network 104. The computing system 102 is communicatively coupled to the technical installation 106 via a communication network 104.

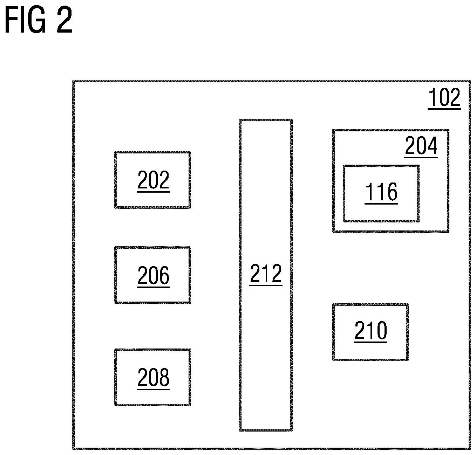

The computing system 102 comprises a virtual flow metering module 116. The computing system 102 may also comprise a processor, a memory, a storage unit, input output unit and a display unit. A detailed view of various components of the computing system 102 is shown in FIG 2. The computing system 102 may be a standalone system or a system on a cloud. In an embodiment, the computing system 102 may be an edge system capable of monitoring flow of the oil in the oil well 108.

The virtual flow metering module 116 is stored in the form of machine-readable instructions and executable by the computing system 102. The virtual flow metering module 116 is configured for generating a simulation model associated with an oil well 108 based on an oil well data. The oil well data is received from at least one measuring unit 110A-N deployed in the technical installation 106. The virtual flow metering module 116 is configured for determining data sets associated with the oil well 108 based on the generated simulation model. Further, the virtual flow metering module 116 is configured for generating data analytics model for the oil well 108 based on the determined data set. Furthermore, the virtual flow metering module 116 is configured for estimating actual data sets based on the generated data analytics model associated with the oil well 108.

In generating data analytics model for the oil well 108 based on the determined data sets, the virtual flow metering module 116 is configured for generating first data analytics model for the oil well 108 based on the determined data sets.

In generating data analytics model for the oil well 108 based on the determined data sets, the virtual flow metering module 116 is configured for determining a first subset values of data sets based on the generated first data analytics model. Further, the virtual flow metering module 116 is configured for determining a difference between the first subset values of data sets and a test subset values of data sets. The test subset values of data sets are computed based on the received oil well data and the difference is an first data anlaytics model error value. The virtual flow metering module 116 is further configured for generating a second data analytics model for the oil well 108 based on the determined difference and the oil well data. The first analytics data model and the second analytics data model are generated using artificial intelligence or machine learning methods.

In estimating actual subset values of data set based on the generated data analytics model associated with the oil well 108, the virtual flow metering module 116 is further configured for determining a second subset values of data sets based on the generated second data analytics model. Further, the virtual flow metering module 116 is further configured for summing the first subset values of data sets derived from the first data analytics model with the second subset values of data sets derived from the second analytics model. Furthermore, the virtual flow metering module 116 is further configured for estimating actual subset values of data sets based on the sum of the first subset values of data sets and the second subset values of data sets. The subset values of the data set comprise flowrate, gas to oil ratio and water cut of the oil well 108 deployed in the technical installation 106.

The virtual flow metering module 116 is configured for continuously training the data analytics model based on the received oil well data and the corresponding simulation model associated with the oil well 108.

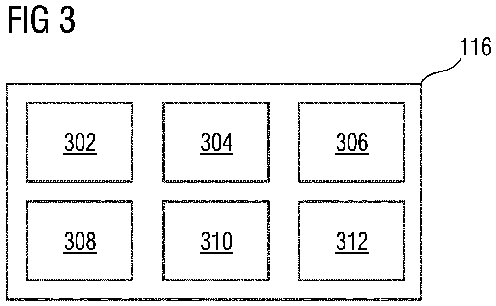

The virtual flow metering module 116 is configured for determining one or more modifications in the oil well data received from the one or more measuring unit 110A-N deployed in the technical installation 106. Further, the virtual flow metering module 116 is configured for updating the data analytics model with the determined one or more modifications. The detailed components of the virtual flow metering module 116 has been explained in FIG. 3.

The computing system 102 is connected to the technical installation 106 via the network 104 (e.g., Internet). Although, FIG 1 illustrates the computing system 102 connected to one technical installation 106, one skilled in the art can envision that the computing system 102 can be connected to several technical installations located at different locations via the network 104.

Further, the computing system 102 may also be connected to user device(s) via the network 104. The user devices can access the computing system 102 for monitoring flow of the oil in the oil well 108. The user devices can be a laptop computer, desktop computer, tablet computer, smartphone and the like. The user devices can access applications (such as cloud applications) via a web browser.

FIG 2 is a block diagram of a computing system 102 such as those shown in FIG 1, depicting various components to implement embodiments of the present invention. In FIG 2, the computing system 102 includes a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes virtual flow metering module 116 stored in the form of machine-readable instructions on any of the above-mentioned storage media and may be in communication with and executed by the processor(s) 202.

When executed by the processor(s) 202, the virtual flow metering module 116 causes the processor(s) 202 to generate a simulation model associated with an oil well 108 based on an oil well data. The oil well data is received from at least one measuring unit 110A-N deployed in a technical installation 106 via a communication network 104. Further, the virtual flow metering module 116 causes the processor(s) 202 to determine data sets associated with the oil well 108 based on the generated simulation model. Also, the virtual flow metering module 116 causes the processor(s) 202 to generate data analytics model for the oil well 108 based on the determined data sets associated with the oil well 108. The virtual flow metering module 116 causes the processor(s) 202 to estimate actual subset values of data sets based on the generated data analytics model associated with the oil well 108.

Further, in generating data analytics model for the oil well based on the determined data sets, the virtual flow metering module 116 causes the processor(s) 202 to generate first data analytics model for the oil well 108 based on the determined data sets associated with the oil well 108.

In generating data analytics model for the oil well 108 based on the determined data sets associated with the oil well 108, the virtual flow metering module 116 causes the processor(s) 202 to determine a first subset values of data set based on the generated first data analytics model. Further, the virtual flow metering module 116 causes the processor(s) 202 to determine a difference between the first subset values of data set and a test subset values of data set. The test subset values of data set are computed based on the determined data set and the difference is an first data anlaytics model error value. Also, the virtual flow metering module 116 causes the processor(s) 202 to generate a second data analytics model for the oil well 108 based on the determined difference and the determined data set. The first analytics data model and the second analytics data model are generated using artificial intelligence or machine learning methods.

In estimating actual subset values of data sets based on the generated data analytics model associated with the oil well 108, the virtual flow metering module 116 causes the processor(s) 202 to determine a second subset values of data set based on the generated second data analytics model. Further, the virtual flow metering module 116 causes the processor(s) 202 to obtain a sum of the first subset values of data set derived from the first data analytics model and the second subset values of data set derived from the second analytics model. Also, the virtual flow metering module 116 causes the processor(s) 202 to estimate actual subset values of data set based on the sum of the first subset values of data set and the second subset values of data set. The subset values of the data sets comprise flowrate, gas to oil ratio and water cut of the oil well 108 deployed in the technical installation 106.

Also, the virtual flow metering module 116 causes the processor(s) 202 to continuously train the data analytics model based on the received oil well data and the corresponding simulation model associated with the oil well 108.

Further, the virtual flow metering module 116 causes the processor (s) 202 to determine one or more modifications in the oil well data received from the one or more measuring unit 110AN deployed in the technical installation 106. Also, the virtual flow metering module 116 causes the processor(s) 202 to update the data analytics model with the determined one or more modifications.

The communication interface 206 is configured for establishing communication sessions between the computing system 102 and the oil well 108. In an embodiment, the communication interface 206 interacts with the interface at the computing system 102 for allowing the engineers to access the subset values of data sets and perform one or more actions on the estimated actual subset values of data sets. The network interface 208 helps in managing network communications between the oil well 108, and the computing system 102.

The input-output unit 210 may include input devices a keypad, touch-sensitive display, camera (such as a camera receiving gesture-based inputs), etc. capable of receiving one or more input signals, such as user commands to process oil well data. Also, the input-output unit 210 may be a display unit for displaying a graphical user interface which visualizes the oil well data and subset values of data sets and also displays the status information associated with each set of actions performed on the oil well data and subset values of data sets. The set of actions may include data entry, data modification or data display. The bus 212 acts as interconnect between the processor 202, the memory 204, and the input-output unit 210.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

FIG 3 is a block diagram of a virtual flow metering module 116, such as those shown in FIG 1 and 2, capable of monitoring flow of an oil well, according to the embodiment of the present invention. In FIG. 3, the virtual flow metering module 116 comprises oil well data processing module 302, a simulation model generator 304, a design of experiment generation module 306, data analytics generation module 308, actual subset value estimator 310 and a database 312.

The oil well data processing module 302 is configured to receive the oil well data from at least one measuring unit 110A-N deployed in the technical installation 106 via the communication network 104. The oil well data comprises reservoir pressure, reservoir PI, Choke valve opening, flowrate, Gas-to-oil ratio, Water-cut, inflow performance relationship, vertical performance relationship and surface facilities like Choke valve. The oil well data processing module 302 is configured to filter out oil well data to obtain the relevant data used for generating a simulation model. The oil well data processing module 302 is also configured to ensure that the data received from the oil well 108 conforms certain predefined requirement and hence there is no loss of data.

The simulation model generator 304 is configured to generate a simulation model associated with an oil well 108 based on the oil well data. The simulation model is a physics-based model depicting the behavioral trait of the oil well 108 during certain conditions defined by the oil well data. In an exemplary embodiment, the simulation model may be a digital twin-based model of the oil well 108. The use of simulation model allows extrapolation as the data sets which are not included in the test subset values of data sets, can be captured by the simulation model. The simulation model further overrides specific anomalies in the oil well data resulting in more robustness.

The design of experiment generation module 306 is configured for determining data sets associated with the oil well 108 based on the generated simulation model. In an embodiment, the data sets are determined using Latin hypercube sampling (LHS) method. The data sets may comprise pressure and temperature readings at various points in the oil well 108.

The data analytics generation module 308 is configured to generate data analytics model for the oil well 108 based on the determined data sets. The data analytics model is an artificial intelligence-based model. For example, the data analytics model uses deep-learning architecture where, the model learns the vital features
independently without any manual intervention. This paves the way of autonomous tuning of the data analytics models, where the prediction and auto-tuning are carried out on a multi-threaded system. Also, since the data analytics model may be a deep learning model it allows learning inverse model. Further, the data analytics model allows to capture redundant sensor information, such as for example measuring units 110A-N to improve model predictability and thus provide high robustness. Instead of relying on separate physics-based model tuned with sensors separately, the deep leaning architecture used here makes use of redundant sensor measurements (well-head pressure, casing pressure, choke-valve inlet pressure and the like) to improve robustness.

The generated data analytics model comprises preliminary subset values of data sets or the secondary subset values of data sets (as described later). The preliminary subset values or the secondary subset values comprises flowrate, Gas-oil-ratio, and water-cut values of the oil well 108. This subset values are derived using the data sets. Specifically, the data analytics generation module 308 is configured to generate first data analytics model for the oil well 108 based on the determined data sets. The first data analytics model comprises first subset values of the data set. The first data analytics model is generated using the determined data sets. The first data analytics model is the tuned with historical oil well data and has the capability of auto-tuning with changes in the received oil well data. Further, the data analytics generation module 308 is configured to determine a first subset values of data sets based on the generated first data analytics model. The first subset values of the data set comprise flowrate, gas to oil ratio and water cut of the oil well 108 deployed in the technical installation 106. For example, if the data sets include reservoir pressure values, then the first data analytics model comprises first subset values which is flow rate, gas to oil ratio and water cut values for the reservoir, for example. Further, the data analytics generation module 308 is configured for determining a difference between the first subset values of data sets and a test subset values of data sets. For example, if the first subset value of data set is flow rate Q1 and the test subset value is Q2, then the difference Q2-Q1 is determined. The test subset values of data sets are computed based on the determined data set and the difference is an first data anlaytics model error value. For example, the test subset value of data set is flow rate previously estimated or derived. The test subset value of data set is generated periodically during the oil well-operations. The difference value is an first data anlaytics model error value or an error value indicating faulty condition or abnormal condition of the oil well 108.

Further, the data analytics model generation module 308 is configured for generating a second data analytics model for the oil well 108 based on the determined difference and the determined data set. The second data analytics model captures the subset values which are missed or not captured by the first data analytics model. The second data analytics model is trained based on the determined data set and difference calculated. The output of the second data analytics model is the second subset values of the data set. For example, the second subset values may include flowrate, gas to oil ration and water cut values for residual data set. The residual data set is the difference calculated and the determined dataset.

The data analytics model generation module 308 is configured for continuously training the data analytics model based on the received oil well data and the corresponding simulation model associated with the oil well 108.

Further, the data analytics model generation module 308 is configured for determining one or more modifications in the oil well data received from the measuring unit 110A-N deployed in the technical installation 106. The one or more modifications comprises change in values of oil well data for example, change is reservoir condition, choke values and the like. Further, the data analytics model generation module 308 is configured for updating the data analytics model with the determined one or more modifications. This is achieved using locks on parallel threads mechanism. The updated data analytics model is trained with the determined one or more modifications and then used for estimating the subset values of data sets.

The subset value estimator 310 is configured for estimating actual subset values of data sets based on the generated data analytics model associated with the oil well 108. Specifically, the subset value estimator 310 is configured for determining a second subset values of data sets based on the generated second data analytics model. Further, the subset value estimator 310 is configured for summing the first subset values of data sets derived from the first data analytics model with the second subset values of data sets derived from the second analytics model. For example, if the first subset values are flow rate Q1 and the second subset value is flow rate Q2, then it is added to estimate value of the flowrate which is a sum of Q1 and Q2.

Based on the sum, the subset value estimator 310 is configured for estimating actual subset values of data sets based on the sum of the first subset values of data sets and the second subset values of data sets.

The database 312 is configured for storing the simulation model, data sets, first analytics model, first subset values, second analytics model, second subset values, estimated actual subset values of data sets and the like. The database 312 is also configured to store the oil well data. In an embodiment, the database 312 may comprise a relational database (RDBMS), file system and not only SQL (NoSQL) database. The database 312 are encrypted to secure all data stored. In an embodiment, the database 312 stores all the oil well data during an intermittent network connectivity. This data is then made available to the computing system 102 once the network connectivity is active.

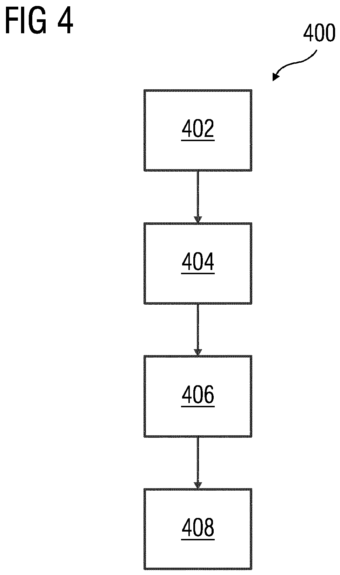

FIG 4 is a process flowchart illustrating an exemplary method 400 of monitoring flow of an oil well in an industrial environment 100, according to the embodiment of the present invention. At step 402, a simulation model associated with the oil well 108 is generated based on an oil well data. The oil well data is received from at least one measuring unit 110A-N deployed in the technical installation 106 via the communication network 104. At step 404, data sets associated with the oil well 108 is determined based on the generated simulation model. At step 406, data analytics model for the oil well 108 is generated based on the determined data sets. At step 408, actual subset values of the data set are estimated based on the generated data analytics model associated with the oil well 108.

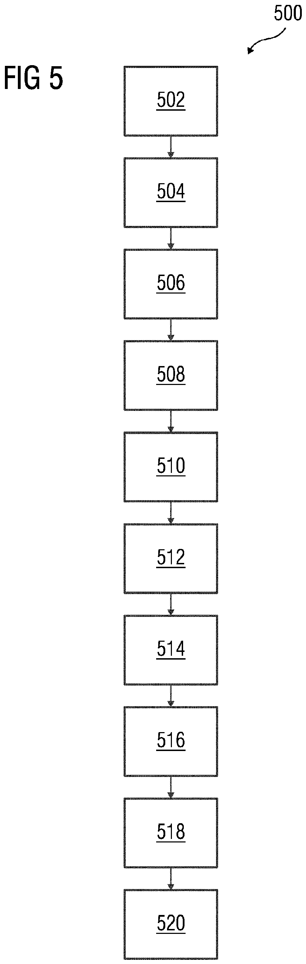

FIG 5 is a process flowchart illustrating an exemplary method 500 of monitoring flow of an oil well in an industrial environment 100, according to another embodiment of the present invention. At step 502, oil well data is received from the at least one measuring unit 110A-N deployed in the technical installation 106 via the communication network 104. At step 504, a simulation model associated with the oil well 108 is generated based on the oil well data. At step 506, data sets associated with the oil well 108 is determined based on the generated simulation model. At step 508, first data analytics model for the oil well 108 is generated based on the determined data sets. At step 510, a first subset values of data sets are determined based on the generated first data analytics model. At step 512, a difference between the first subset values of data sets and a test subset values of data sets is determined. The test subset values of data sets are computed based on the received oil well data and wherein the difference is an first data anlaytics model error value. At step 514, a second data analytics model for the oil well 108 is generated based on the determined difference and the oil well data. The first analytics data model and the second analytics data model are generated using artificial intelligence or machine learning methods. At step 516, a second subset values of data sets are determined based on the generated second data analytics model. At step 518, the first subset values of data sets derived from the first data analytics model is summed with the second subset values of data sets derived from the second analytics model. At step 520, the actual subset values of data sets are estimated based on the sum of the first subset values of data and the second subset values of data sets. The subset values of the data set comprise flowrate, gas to oil ratio and water cut of the oil well 108 deployed in the technical installation 106.

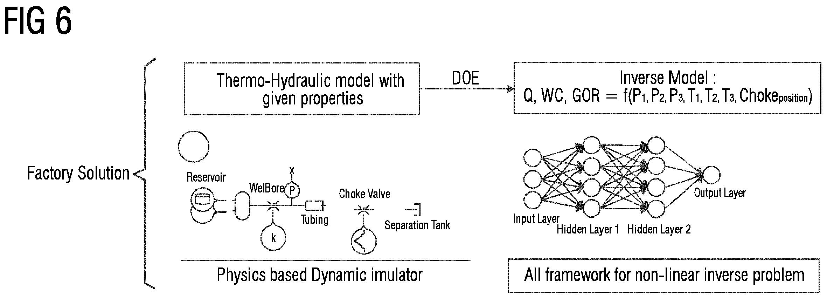

FIG 6 is a schematic representation 600 of a process of generating data analytics model for the oil well 108, according to another embodiment of the present invention. In FIG. 6, a process of generating a first data analytics model is depicted. At first, a simulation model is generated using physics based dynamic emulator. This simulation model is thermo hydraulic model with given properties of oil well 108. Using this simulation model, a data set which is the design of experiment (DOE) is generated. The data set comprises temperature and pressure readings of the oil well 108 and choke values. The data set is then used to train an Artificial intelligence-based framework for generating data analytics model. This data analytics model is an inverse model comprising first subset of values such as flowrate Q, water cut value and gas to oil ratio. Such inverse model is a function of dataset. The AI based framework comprises artificial neural network for generating the data analytics model. In an embodiment, a factory solution as depicted corresponds to the first data analytics model.

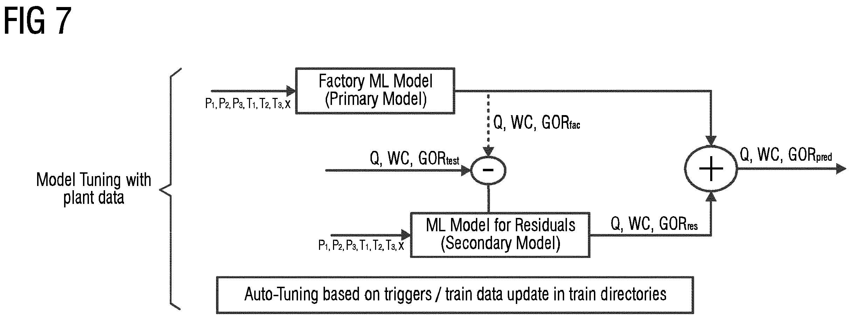

FIG 7 is a schematic representation 700 of a process of estimating actual subset values of data sets based on the generated data analytics model associated with the oil well 108, according to an embodiment of the present invention. In FIG. 7, first data analytics model, referred as primary model is generated using the determined dataset. Later, difference between the output of the first data analytics model, which is the first subset values Q, WC, GOR fac, and a test subset values Q, WC, GOR test is determined. Such difference is an first data anlaytics model error value or an error value of the oil well 108. Based on this difference and the determined data set, second data analytics model, referred here as secondary model is generated. This secondary model is auto tuned based on triggers or test subset values. This secondary model captures the residual values of the subset values Q, WC, GOR res which may not be captured by the primary model. Finally, the output of the secondary model, which is the second subset values and the output of the primary model, which is the first subset values is summed to estimate actual subset values Q, WC, GOR predicted.

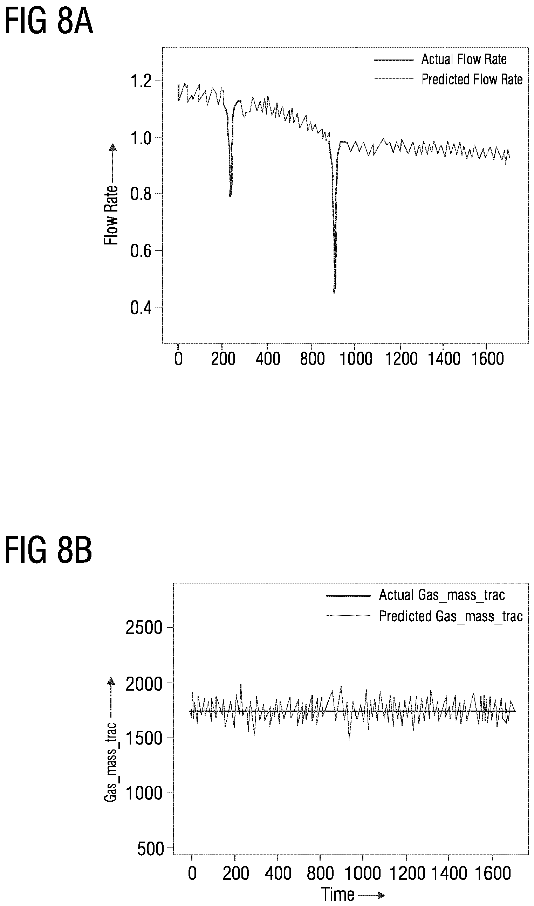

FIG 8A-B is a graphical representation of estimated subset values of data sets versus actual subset values, according to an embodiment of the present invention. In FIG 8A, actual subset value of data set versus estimated subset value of the data set is depicted. For example, if subset value is flow rate then actual flowrate of the oil well 108 versus predicted flowrate is depicted. In FIG 8B, if the subset value is gas to oil ratio, then actual gas to oil ration version predicted gas to oil ratio is depicted. This graph indicates anomalies detected between the actual subset value and the estimated subset value. This graph also shows the accuracy rate of the present invention.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Further Embodiments:

1. A method (400) for monitoring flow of an oil well in an industrial environment (100), comprising:
   generating a simulation model associated with an oil well (108) based on an oil well data, wherein the oil well data is received from at least one measuring unit (110A-N) deployed in a technical installation (106) via a communication network (104);
   determining data sets associated with the oil well (108) based on the generated simulation model;
   generating data analytics model for the oil well (108) based on the determined data sets; and
   estimating actual subset values of data set based on the generated data analytics model associated with the oil well (108).
2. The method (400) according to embodiment 1, wherein generating data analytics model for the oil well (108) based on the determined data sets comprises:
   generating first data analytics model for the oil well (108) based on the determined data sets.
3. The method (400) according to embodiments 1 or 2, wherein generating data analytics model for the oil well (108) based on the determined data sets comprises:
   determining a first subset values of data sets based on the generated first data analytics model;
   determining a difference between the first subset values of data sets and a test subset values of data sets, wherein the test subset values of data sets is computed based on the received oil well data and wherein the difference is an first data analytics model error value; and
   generating a second data analytics model for the oil well (108) based on the determined difference and the oil well data.
4. The method (400) according to embodiments 2 or 3, wherein estimating actual subset value of data set based on the generated data analytics model associated with the oil well (108) comprises:
   determining a second subset values of data sets based on the generated second data analytics model; and
   summing the first subset values of data sets derived from the first data analytics model with the second subset values of data sets derived from the second analytics model; and
   estimating actual subset values of data sets based on the sum of the first subset values of data sets and the second subset values of data sets.
5. The method (400) according to embodiments 1 to 4, comprising:
   continuously training the data analytics model based on the received oil well data and the corresponding simulation model associated with the oil well (108).
6. The method (400) according to embodiments 1 to 5, further comprising:
   determining one or more modifications in the oil well data received from the one or more measuring unit (110A-N) deployed in the technical installation (106);
   updating the data analytics model with the determined one or more modifications.
7. The method (400) according to embodiments 1 to 6, wherein the first analytics data model and the second analytics data model are generated using artificial intelligence or machine learning methods.
8. The method (400) according to embodiments 1 to 7, wherein the subset values of the data set comprises flowrate, gas to oil ratio and water cut of the oil well (108) deployed in the technical installation (106).
9. A computing system (102) for monitoring flow of an oil well in an industrial environment (100), the system (102) comprising:
   one or more processor(s) (202); and
   a memory (204) coupled to the one or more processor (s) (204), wherein the memory (204) comprises virtual flow metering module (116) stored in the form of machine-readable instructions executable by the one or more processor(s) (202), wherein the virtual flow metering module (116) is capable of performing a method according to any of the embodiments 1-8.
10. An industrial environment (100) comprising:
   one or more measuring devices (110A-N) deployed in a technical installation (106) for measuring one or more oil well data associated with an oil well (108);
   a computing system (102) communicatively coupled to the one or more measuring devices (110A-N) via a network (104) as defined in embodiment 9.
11. A computer-program product, having machine-readable instructions stored therein, that when executed by a processor(s) (202), cause the processor(s) (202) to perform method steps according to any of the embodiments 1-8.

### Reference numerals

100- industrial environment
102-computing system
104-network
106-technical installation
108-oil well
110A-N- one or more measuring unit
112A-N pressure and temperature sensors
114-choke valve
116-virtual flow metering module
202-processor
204-memory
206-communication interface
208-network interface
210-input output unit
212-bus
302-oil well data processing module
304-a simulation model generator
306-a design of experiment generation module
308- data analytics generation module 308,
310-actual subset value estimator 310
312-database

## Claims

1. A method (400) for monitoring flow of an oil well in an industrial environment (100), comprising:
generating a simulation model associated with an oil well (108) based on an oil well data, wherein the oil well data is received from at least one measuring unit (110A-N) deployed in a technical installation (106) via a communication network (104);
determining data sets associated with the oil well (108) based on the generated simulation model;
generating data analytics model for the oil well (108) based on the determined data sets; and
estimating actual subset values of data set based on the generated data analytics model associated with the oil well (108).

2. The method (400) according to claim 1, wherein generating data analytics model for the oil well (108) based on the determined data sets comprises:
generating first data analytics model for the oil well (108) based on the determined data sets.

3. The method (400) according to claim 1 or 2, wherein generating data analytics model for the oil well (108) based on the determined data sets comprises:
determining a first subset values of data sets based on the generated first data analytics model;
determining a difference between the first subset values of data sets and a test subset values of data sets, wherein the test subset values of data sets is computed based on the received oil well data and wherein the difference is an first data analytics model error value; and
generating a second data analytics model for the oil well (108) based on the determined difference and the oil well data.

4. The method (400) according to claim 2 or 3, wherein estimating actual subset value of data set based on the generated data analytics model associated with the oil well (108) comprises:
determining a second subset values of data sets based on the generated second data analytics model; and
summing the first subset values of data sets derived from the first data analytics model with the second subset values of data sets derived from the second analytics model; and
estimating actual subset values of data sets based on the sum of the first subset values of data sets and the second subset values of data sets.

5. The method (400) according to claims 1 to 4, comprising:
continuously training the data analytics model based on the received oil well data and the corresponding simulation model associated with the oil well (108).

6. The method (400) according to claims 1 to 5, further comprising:
determining one or more modifications in the oil well data received from the one or more measuring unit (110A-N) deployed in the technical installation (106);
updating the data analytics model with the determined one or more modifications.

7. The method (400) according to claims 1 to 6, wherein the first analytics data model and the second analytics data model are generated using artificial intelligence or machine learning methods.

8. The method (400) according to claims 1 to 7, wherein the subset values of the data set comprises flowrate, gas to oil ratio and water cut of the oil well (108) deployed in the technical installation (106).

9. A computing system (102) for monitoring flow of an oil well in an industrial environment (100), the system (102) comprising:
one or more processor(s) (202); and
a memory (204) coupled to the one or more processor (s) (204), wherein the memory (204) comprises virtual flow metering module (116) stored in the form of machine-readable instructions executable by the one or more processor(s) (202), wherein the virtual flow metering module (116) is capable of performing a method according to any of the claims 1-8.

10. An industrial environment (100) comprising:
one or more measuring devices (110A-N) deployed in a technical installation (106) for measuring one or more oil well data associated with an oil well (108);
a computing system (102) communicatively coupled to the one or more measuring devices (110A-N) via a network (104) as claimed in claim 9.

11. A computer-program product, having machine-readable instructions stored therein, that when executed by a processor(s) (202), cause the processor(s) (202) to perform method steps according to any of the claims 1-8.
